# EUROPÄISCHE PATENTSCHRIFT

(11) **EP 1 251 538 B1**
(45) Veröffentlichungstag und Bekanntmachung des Hinweises auf die Patenterteilung: **07.06.2006**
(21) Anmeldenummer: 02005491.2
(22) Anmeldetag: 11.03.2002
(51) Int. Cl.: H01H 31/12, H02B 1/18

(54) **Schmaler dreipoliger Sicherungslasttrennschalter**
Narrow three-pole load break switch with fuses
Disjoncteur-sectionneur étroit, tripolaire à fusibles

(30) Priorität: 20.04.2001 DE 10119646
(43) Veröffentlichungstag der Anmeldung: 23.10.2002
(73) Patentinhaber: Jean Müller GmbH Elektrotechnische Fabrik, 65343 Eltville (DE)
(72) Erfinder:
(74) Vertreter: Quermann, Helmut

(56) Entgegenhaltungen:
- EP-A- 0 926 692
- DE-A- 3 019 925
- DE-A- 3 736 665
- DE-A- 4 243 537

## Beschreibung

Die Erfindung betrifft einen dreipoligen Sicherungslasttrennschalter, insbesondere für den Aufbau auf Sammelschienensystemen, mit versetzt angeordneten Einbauräumen für drei Niederspannungs-Hochleistungs-Sicherungen (NH-Sicherungen), mit einem Gehäuse zur Aufnahme der Kontakte für die Sicherungen und einem schwenkbar im Gehäuse gelagerten Deckel zur Aufnahme der Sicherungen, wobei eine voreilend einzuschaltende und nacheilend auszuschaltende Sicherung näher der Schwenkachse des Deckels zugeordnet ist als die beiden verbleibenden Sicherungen.

Üblicherweise werden bei Sicherungslasttrennern die Sicherungen in einer Reihe, wie längs bei einer Leistenbauform oder quer bei einer Trennerbauform, angeordnet. Die Leistenbauform ist in der DE 42 43 537 A1 und der EP 0 926 692 A2 beschrieben.

Es ist auch schon ein Sicherungslasttrennschalter bekannt geworden (Firma ABB, Typ SLK 400, Ident. Nr. NHP 139 225 R1), bei dem benachbart der Schwenkachse des Deckels im Gehäuse zwei NH-Sicherungen nebeneinander, und in größerem Abstand zur Schwenkachse die dritte NH-Sicherung angeordnet sind. Dieser Sicherungslasttrennschalter ist für NH-Sicherungen der Größen 1 und 2 dimensioniert. Die Breite des Sicherungslasttrennschalters beträgt 150 mm, der Nennstrom 400 A.

Der beschriebene Aufbau dieses Sicherungslasttrennschalters mit den versetzt angeordneten Einbauräumen für die drei NH-Sicherungen birgt diverse Probleme in sich: So besteht die Gefahr, dass bei unsachgemäßer Handhabung des Schaltgerätes, das heißt bei einer nicht vollständig vollzogenen Einschaltstellung, bereits zwei Phasen geschlossen sind, dies kann insbesondere bei Motorlast zu kritischen Betriebszuständen führen. Beim Abschaltvorgang ergibt sich an zwei Phasen in unmittelbarer Nähe eines Kontaktes der dritten Phase eine Lichtbogenentwicklung. Hier besteht dann die Gefahr eines Querkurzschlusses. Die Lagerstellen müssen in dem Bereich untergebracht werden, in dem der Sicherungslasttrennschalter ohnehin eine geringe Breite aufweist.

Ein dreipoliger Sicherungslasttrennschalter der eingangs genannten Art ist aus der DE 30 19 925 A1 bekannt. Bei diesem sind zwei der drei NH-Sicherungen, bezogen auf deren Längsachse, in einer Reihe und die dritte NH-Sicherung neben den beiden vorgenannten NH-Sicherungen angeordnet. Anwendung findet dieser Sicherungslasttrennschalter insbesondere für NH-Sicherungen der Größe 00.

Es ist Aufgabe der Erfindung, einen dreipoligen Sicherungslasttrennschalter der eingangs genannten Art so weiter zu bilden, dass dieser bei möglichst schmaler Bauweise ein optimales Ein- und Ausschaltverhalten der Sicherungen gewährleistet.

Die Aufgabe wird bei einem dreipoligen Sicherungslasttrennschalter der eingangs genannten Art dadurch gelöst, dass die beiden nacheilend einzuschaltenden Sicherungen so angeordnet sind, dass sie gleichzeitig schalten, und dass die Sicherungen symmetrisch zur Längsmittelachse des Sicherungslasttrennschalters angeordnet sind.

Die Sicherungen sind vorzugsweise NH-Sicherungen der Größe 000 und der Schalter weist vorzugsweise eine Breite von maximal 70 mm auf. Insbesondere weist der Schalter eine Breite von maximal 63 mm auf.

Der erfindungsgemäße dreipolige Sicherungslasttrennschalter weist demnach versetzt angeordnete Sicherungseinsätze auf, wobei die einzeln angeordnete Sicherung, vorzugsweise diejenige die dem zweiten Leiter (L2) zugeordnet ist, näher an dem Drehpunkt der Einschwenkvorrichtung positioniert ist, als die beiden Sicherungen für die verbleibenden Phasen. Die letztgenannten Sicherungen sind auf gleichem Abstand zum Drehpunkt nebeneinander angeordnet, um eine gleichzeitige Kontaktgabe zu gewährleisten.

Die erfindungsgemäße Ausgestaltung des Sicherungslasttrennschalters ist unter dem besonderen Aspekt der Entwicklung eines Sicherungslasttrenners der Größe NH 000 für die Sammelschienenmontage zu sehen. Dies soll bei einer möglichst schmalen Bauweise realisiert, aber dennoch nicht die relativ große Einbauhöhe einer Leiste benötigt werden. Der übliche Einsatz ist hier die Verwendung in Einbaufeldern - speziell mit 250 mm Breite und üblicherweise ca. 210 mm Einbauraum in der Breite - in denen zwei marktgängige NH 00-Sicherungslasttrennschalter für Sammelschienenmontage montierbar sind. Diese weisen jeweils eine übliche Breite von 105 mm auf. - Im Gegensatz hierzu finden bei dem erfindungsgemäßen Sicherungslasttrennschalter NH-Sicherungen der Größe 000 Verwendung. Der Sicherungslasttrennschalter ist wegen dieser optimierten Anordnung in einem Bauraum von maximal 70 mm Breite realisierbar, wobei hier - wegen der üblichen 9 mm-Teilung - ein Maß von maximal 63 mm anzustreben ist. Hierdurch kann der Breitenvorteil genutzt werden, ohne dass die üblichen Hüllmaße in der Bauhöhe aufgegeben werden müssen. Vorhandene marktübliche Blendensysteme können weiterhin eingesetzt werden und es ist eine einfache Kombination mit anderen Systemkomponenten möglich.

Wegen der Platzsituation in der Bauhöhe ist eine besondere Form für den Kontakt anzustreben, der den geringsten Abstand zum Drehpunkt des Deckels aufweist. Dieser Kontakt ist vorzugsweise so geneigt, dass beim Einschalten das Sicherungsmesser von oben möglichst tangential um den Drehpunkt des Deckels in den Kontakt eingeführt wird. Es ist andererseits denkbar, den Kontakt mit zusätzlichen Mitteln zum einfachen Einführen des Sicherungsmessers zu versehen, um auch ein stirnseitiges Einschwenken zu ermöglichen. Bei dieser Ausführung ist eine mechanische Verstärkung zur Erhöhung der Biegesteifigkeit des Kontaktes zu empfehlen.

Die Verriegelungen der Sicherungen im Deckel sind vorzugsweise jeweils außen angebracht, um die Erreichbarkeit der Sicherungen zu verbessern. Unter diesem Aspekt wird es als besonders vorteilhaft angesehen, wenn die Sicherungen zum Verbinden mit dem Deckel in unterschiedlichen Richtungen eingeschoben werden. So wird die der Schwenkachse des Deckels benachbarte Sicherungen durch eine von der Schwenkachse weggerichtete Bewegung in den Deckel eingesetzt, während die der Schwenkachse des Deckels abgewandten Sicherungen durch eine auf die Schwenkachse zugerichtete Bewegung in den Deckel einsetzbar sind. Ungeachtet des minimalen Bauraumes können die Sicherungen so, bei günstigen Handling, mit dem Deckel verbunden werden.

Der erfindungsgemäße Sicherungslasttrennschalter ist vorzugsweise für Nennströme von maximal 100 A ausgelegt.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines bevorzugten Ausführungsbeispieles dargestellt, ohne auf dieses beschränkt zu sein. Es stellt dar:

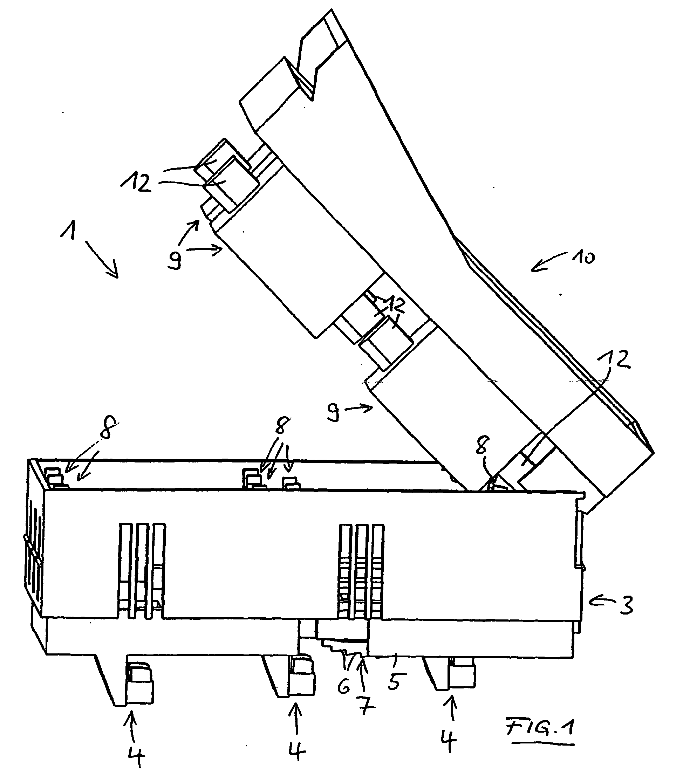

- Figur 1: eine räumliche Seitenansicht des Sicherungslasttrennschalters, bei geöffnetem Deckel und von diesem aufgenommenen Sicherungen,

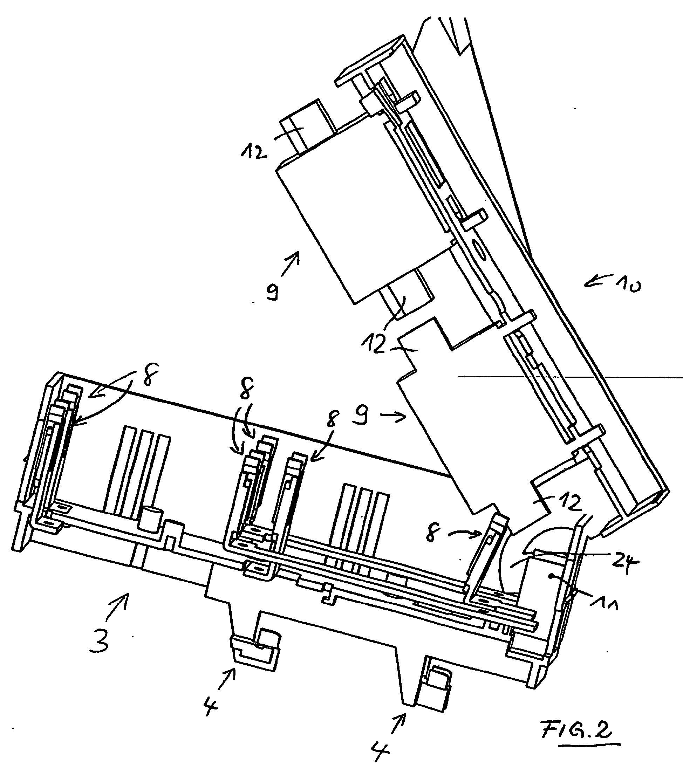

- Figur 2: eine räumliche Darstellung des Sicherungslasttrennschalters gemäß Figur 1, allerdings bei weggeschnittenen Seitenbereichen von Gehäuse und Deckel sowie einer entfernten Sicherung,

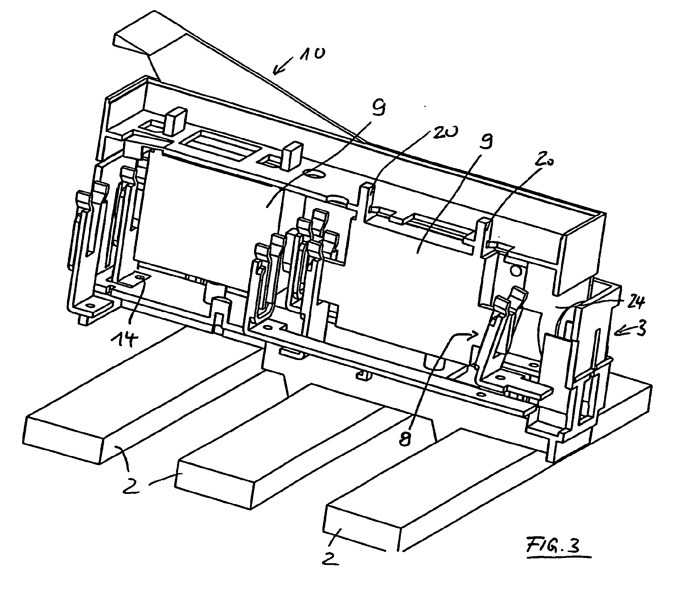

- Figur 3: eine Darstellung gemäß Figur 2, allerdings bei geschlossenem Deckel und in auf einem Sammelschienensystem montiertem Zustand,

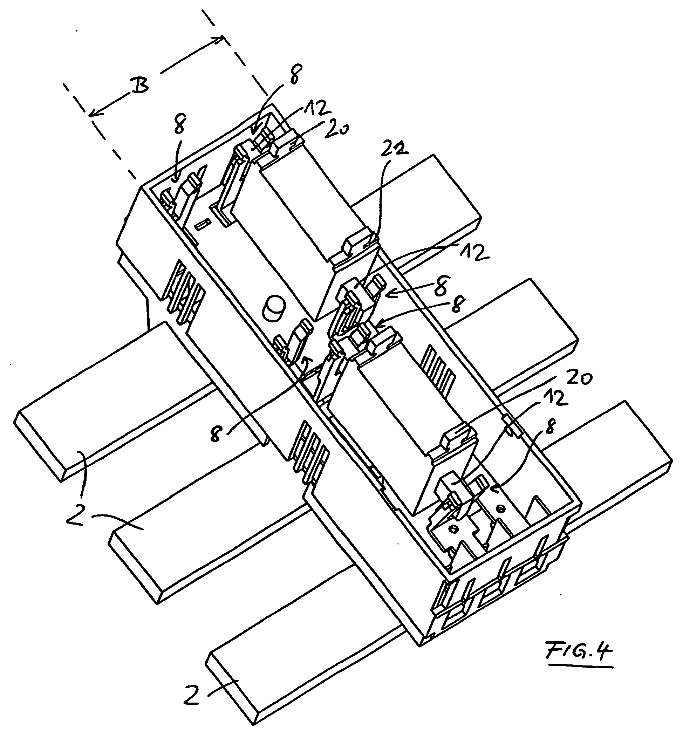

- Figur 4: eine räumliche Ansicht des auf das Sammelschienensystem aufgesetzten Gehäuses mit zwei von diesem aufgenommenen Sicherungen, schräg von oben gesehen (bei abgenommenem Deckel),

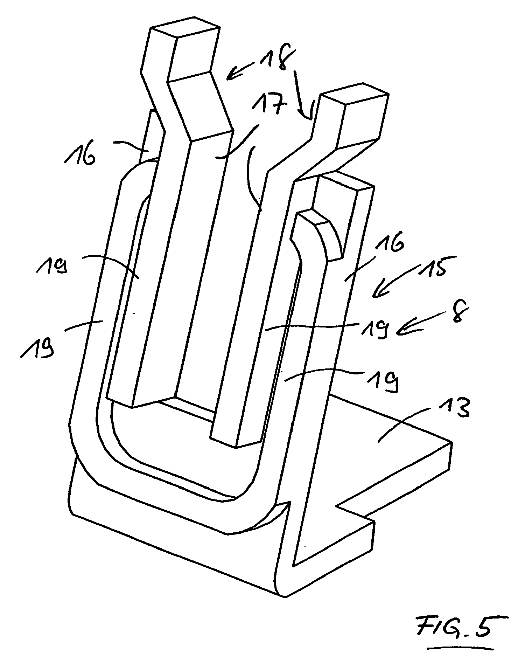

- Figur 5: eine räumliche Ansicht des dem Schwenklager von Deckel und Gehäuse benachbarten Kontaktes,

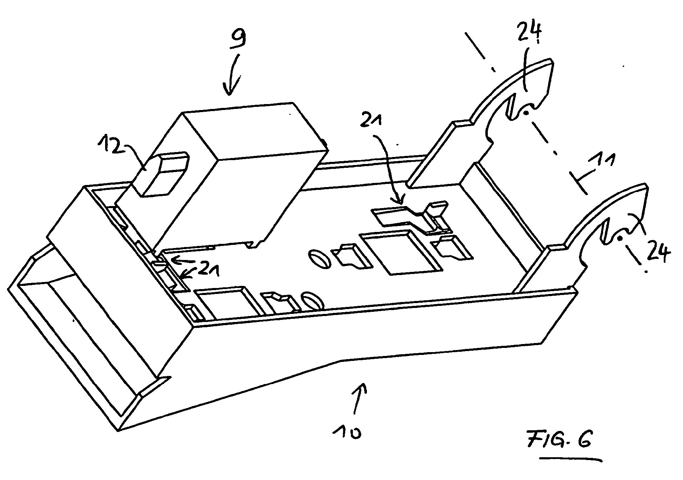

- Figur 6: den Deckel mit einer in diesen eingesetzten Sicherung, schräg von unten gesehen und
- Figur 7: eine Unteransicht des Deckels mit drei in diesen eingesetzten Sicherungen.

Der in den Figuren gezeigte dreipolige Sicherungslasttrennschalter 1 dient dem Aufbau auf einem aus drei parallel angeordneten Sammelschienen 2 gebildeten Sammelschienensystem. Hierzu ist das Gehäuse 3 des Sicherungslasttrennschalters 1 auf seiner Unterseite mit drei hakenförmigen Füßen 4 versehen, die beim seitlichen Aufschieben auf die Sammelschienen 2 diese hintergreifen. Im Boden 5 des Gehäuses 3 ist eine mit einzelnen Zähnen 6 versehene Einrichtung 7 zum Festlegen des Gehäuses 3 relativ zum Sammelschienenssystem schwenkbar gelagert. Die Zähne 6 dienen dem Zweck, den Sicherungslasttrennschalter 1 bei Sammelschienen 2 unterschiedlicher Breite verwenden zu können, wobei jeweils unterschiedliche Zähne 6 die mittlere Sammelschiene 2 auf ihrer dem zugeordneten Fuß 4 abgewandten Seite kontaktieren.

Im Gehäuse sind sechs Kontakte 8 gelagert, wobei jeweils zwei in der Längsrichtung des Gehäuses 3 miteinander fluchtende Kontakte 8 ein Kontaktpaar bilden, das der Aufnahme eines NH-Sicherungseinsatzes 9 der Größe 000 dient. Im Bereich einer Stirnseite des Gehäuses 3 ist ein Deckel 10 über seine zwei Wangenabschnitte 24 um eine Achse 11 schwenkbar im Gehäuse 3 gelagert. Im Deckel 10 sind die drei Sicherungen 9 gehalten, somit zusammen mit dem Deckel 10 schwenkbar. Jede Sicherung 9 weist zwei Sicherungsmesser 12 auf, die bei geschlossenem Deckel 10 die beiden zugeordneten Kontakte 8 kontaktieren.

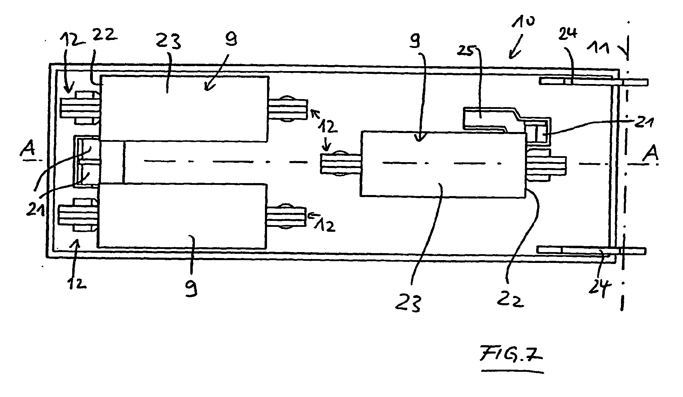

Die drei Sicherungen sind symmetrisch zur Mittellängsachse A-A (Figur 7) des Sicherungslasttrennschalters 1 bzw. des Gehäuses 3 / Deckels 10 angeordnet. Eine der drei Sicherungen 9 ist benachbart der Schwenkachse 11 des Deckels 10 angeordnet und es fällt die Mittellängsachse dieser in die zugeordneten Kontakte 8 eingesteckten Sicherung 9 mit der Mittellängsachse A-A zusammen. Die beiden anderen Sicherungen 9 sind weiter von der Schwenkachse 11 entfernt positioniert und parallel zueinander in Abstand zur Mittellängsachse A-A angeordnet. Diese beiden Sicherungen 9 befinden sich in demselben Abstand zur Schwenkachse 11. Dies hat zur Folge, dass die der Achse 11 benachbarte Sicherung 9 voreilend einschaltet und nacheilend ausschaltet und die anderen Sicherungen 9 gleichzeitig schalten.

Der Sicherungslasttrennschalter 1 bzw. das Gehäuse 3 / der Deckel 10 weisen eine Breite B von 63 mm auf. Der Nennstrom des Sicherungslastrennschalters beträgt maximal 100 A.

Die einzelnen Kontakte 8 sind im Gehäuse 3 gelagert und sind elektrisch leitend mit den Sammelschienen 2 bzw. Verbrauchern in bekannter Art und Weise verbunden.

Der jeweilige Kontakt 8 stützt sich über eine Grundplatte 13 am Boden 5 des Gehäuses 3 bzw. im Bodenbereich am Gehäuse 3 ab und ist mit einer Bohrung 14 für ein Befestigungsmittel, insbesondere eine Schraube versehen, die dem Verbinden von Kontakt 8 und Gehäuse 3 dient. An die Grundplatte 13 des Kontaktes 8 schließt sich ein U-förmiger Abschnitt 15 an, der zwei parallele Schenkel 16 aufweist. In diese sind die eigentlichen Kontaktabschnitte 17 integriert, die in erweiterte Abschnitte 18 münden, welche die Funktion von Einführhilfen für das jeweilige Sicherungsmesser 12 besitzen. Die Kontaktabschnitte 17 weisen, bezogen auf die Längserstreckung des Sicherungsmessers 12 eine relativ große Stärke auf, so dass sie über den U-förmigen Abschnitt 15 hinausstehen und damit zur Erhöhung der Biegesteifigkeit des Kontaktes 8, bezogen auf eine Kraftrichtung senkrecht zur Plattenebene des Abschnittes 15 bzw. in Richtung der Ebene der Grundplatte 13, beitragen. Gegebenenfalls kann eine zusätzliche U-förmige Verstärkung 19 vorgesehen sein, die einem Auseinanderspreizen der beiden Schenkel 16 des Kontaktes 8 entgegenwirkt.

Die vorbeschriebene Gestaltung des Kontaktes 8 ist insbesondere unter dem Aspekt desjenigen Kontaktes 8 zu sehen, der der Schwenkachse 11 des Deckels 10 am nächsten liegt. Während alle anderen Kontakte so ausgebildet sind, dass deren Grundplatte 13 im rechten Winkel zum U-förmigen Abschnitt 15 angeordnet ist, bilden die genannten Teile des der Schwenkachse 11 am nächsten liegenden Kontaktes 8 einen spitzen Winkel. Dieser beträgt beispielsweise zwischen 75 und 85°, insbesondere 80°. Er berücksichtigt, dass das diesem Kontakt 8 zugeordnete Sicherungsmesser 12 der in den Deckel 10 eingesetzten, der Schwenkachse 11 benachbarten Sicherung 9 in relativ geringem Abstand zur Schwenkachse 11 und damit entlang einer relativ stark gekrümmten Bahn bewegt wird. Der in Richtung der Schwenkachse 11 geneigte Abschnitt 15 des Kontaktes 8 stellt sicher, dass das Sicherungsmesser 12 dieser Sicherung 8 weitgehend in Richtung der Längserstreckung der Kontaktabschnitte 17 in den Kontakt 8 eingeführt wird.

Damit die benachbart der Schwenkachse 11 angeordnete Sicherung 9 in möglichst großem Abstand zur Schwenkachse 11 positioniert ist, erfolgt deren Verbindung mit dem Deckel 10, indem die Sicherung 9 von der Schwenkachse 11 weg in den Deckel 10 eingeschoben wird. Die beiden anderen Sicherungen 9 hingegen können in Richtung auf die Schwenkachse 11 in den Deckel eingeschoben werden. Die Haltemittel 21, die die Grifflaschen 20 der Sicherungen 9 im Deckel 10 halten, sind als sich verjüngende Schlitze ausgebildet, wobei die erweiterten Schlitzbereiche dem Durchstecken der Grifflaschen 20 und die verjüngten Schlitzbereiche dem Hintergreifen der Grifflaschen 20 dienen. Bei den im Deckel 10 eingesetzten Sicherungen 9 dienen Verriegelungsmittel 21 dem Fixieren der Sicherungen 9. Die Verriegelungsmittel 21 sind insbesondere als vorgespannte Bauteile, insbesondere Bestandteil des Deckels 10 bildende Kunststoffspritzgussbauteile ausgebildet, die die Sicherungen 9 in der in den Deckel 10 eingesetzten Position hintergreifen, wobei sie das der Einschubrichtung abgewandte Abdeckblech 22 des Isolierkörpers 23 der Sicherung 9 kontaktieren. Das Verriegelungsmittel 21 für die der Schwenkachse 11 zugewandte Sicherung 9 ist demzufolge auf der der Schwenkachse 11 zugewandten Seite des Isolierkörpers dieser Sicherung 9 positioniert, wobei, um das Verriegelungsmittel 21, das in der Nähe der Achse 11 angeordnet ist, auf einfache Art und Weise entriegeln zu können, es einen in Richtung der anderen Sicherungen 9 ragenden Ansatz 25 aufweist. Dieser ist somit neben dem Isolierkörper 23 angeordnet.

## Patentansprüche

1. Dreipoliger Sicherungslasttrennschalter (1), insbesondere für den Aufbau auf Sammelschienensystemen (2), mit versetzt angeordneten Einbauräumen für drei NH-Sicherungen (9), mit einem Gehäuse (3) zur Aufnahme der Kontakte (8) für die Sicherungen (9) und einem schwenkbar im Gehäuse (3) gelagerten Deckel (10) zur Aufnahme der Sicherungen (9), wobei eine voreilend einzuschaltende und nacheilend auszuschaltende Sicherung (9) näher der Schwenkachse (11) des Deckels (10) zugeordnet ist als die beiden verbleibenden Sicherungen (9, 9), **dadurch gekennzeichnet, dass** die beiden nacheilend einzuschaltenden Sicherungen (9, 9) so angeordnet sind, dass sie gleichzeitig schalten, und dass die Sicherungen (9) symmetrisch zur Längsmittelachse (A-A) des Sicherungslasttrennschalters (1) angeordnet sind.

2. Schalter nach Anspruch 1, **dadurch gekennzeichnet, dass** die Sicherungen NH-Sicherungen (9) der Größe 000 sind.

3. Schalter nach Anspruch 1 oder 2, **dadurch gekennzeichnet, dass** er eine Breite von maximal 70 mm, vorzugsweise maximal 63 mm aufweist.

4. Schalter nach einem der Ansprüche 1 bis 3, **dadurch gekennzeichnet, dass** der der Schwenkachse (11) des Deckels (10) am nächsten liegende Kontakt (8) entsprechend der Einschwenkrichtung des Sicherungsmessers (12) der diesem Kontakt (8) zugeordneten Sicherung (9) geneigt angeordnet ist, wobei dieser Kontakt (8) sich an einer Grundplatte (13) abstützt und ein U-förmiger Abschnitt (15) dieses Kontakts mit der Grundplatte (13) einen spitzen Winkel, vorzugsweise einen Winkel zwischen 75° und 85°, insbesondere einen Winkel von 80° bildet.

5. Schalter nach einem der Ansprüche 1 bis 4, **dadurch gekennzeichnet, dass** der der Schwenkachse (11) des Deckels (10) am nächsten liegende Kontakt (8) mit Einführhilfen (18) versehen ist.

6. Schalter nach einem der Ansprüche 1 bis 5, **dadurch gekennzeichnet, dass** der der Schwenkachse (11) des Deckels (10) am nächsten liegende Kontakt (8) mit Versteifungen (19) zur Erhöhung der Biegesteifigkeit des Kontakts (8) versehen ist.

7. Schalter nach einem der Ansprüche 1 bis 6, **dadurch gekennzeichnet, dass** Mit tel (21) zum Verriegeln der Sicherungen (9) im Deckel (10) vorgesehen sind, die jeweils neben der Sicherung (9) angeordnet sind.

8. Schalter nach einem der Ansprüche 1 bis 7, **dadurch gekennzeichnet, dass** die jeweilige Sicherung (9) Haltemittel (20) zum Verbinden der Sicherung (9) mit dem Deckel (10) aufweist, wobei die der Schwenkachse (11) des Deckels (10) benachbarte Sicherung (9) durch eine von der Schwenkachse (11) weggerichtete Bewegung in den Deckel (10) einsetzbar ist und/oder die der Schwenkachse (11) des Deckels (10) abgewandten Sicherungen (9, 9) durch eine auf die Schwenkachse (11) zugerichtete Bewegung in den Deckel (10) einsetzbar sind.

9. Schalter nach einem der Ansprüche 1 bis 8, **dadurch gekennzeichnet, dass** die jeweilige Sicherung (9) Haltemittel (20) zum Verbinden der Sicherung (9) mit dem Deckel (10) aufweist, wobei die der Schwenkachse (11) des Deckels (10) benachbarte Sicherung (9) durch eine auf die Schwenkachse (11) zugerichtete Bewegung in den Deckel (10) einsetzbar ist und/oder die der Schwenkachse (11) des Deckels (10) abgewandten Sicherungen (9, 9) durch eine von der Schwenkachse (11) weggerichtete Bewegung in den Deckel (10) einsetzbar sind.

## Claims

1. Three-pole fuse switch-disconnector (1), more particularly for installation on busbar systems (2), featuring staggered compartments for three I.v.h.b.c. fuses (9), a box (3) for accommodating the contacts (8) for the fuses (9), and a lid (10) swivel-mounted in the box (3) in order to accommodate the fuses (9), with one early closing and late opening fuse (9) being more closely assigned to the swivelling axis (11) of the lid (10) than the two remaining fuses (9, 9), **characterised in that** the two late closing fuses (9, 9) are arranged so as to operate simultaneously, and that the fuses (9) are arranged symmetrically with respect to the longitudinal median axis (A-A) of the fuse switch-disconnector (1).

2. Switching device according to claim 1, **characterised in that** the fuses are size 000 I.v.h.b.c. fuses (9).

3. Switching device according to claim 1 or 2, **characterised in that** it has a maximum width of 70 mm, preferably not more than 63 mm.

4. Switching device according to any one of claims 1 to 3, **characterised in that** the contact (8) situated nearest to the swivelling axis (11) of the lid (10) is angled in accordance with the direction in which the blade (12) of the fuse (9) assigned to said contact (8) is swivelled into position, said contact (8) being supported on a baseplate (13) and a U-shaped portion (15) of said contact forming an acute angle with the baseplate (13), preferably an angle of between 75° and 85°, more particularly an angle of 80°.

5. Switching device according to any one of claims 1 to 4, **characterised in that** the contact (8) situated nearest to the swivelling axis (11) of the lid (10) is provided with insertion guides (18).

6. Switching device according to any one of claims 1 to 5, **characterised in that** the contact (8) situated nearest to the swivelling axis (11) of the lid (10) is provided with bracing elements (19) for increasing the stiffness under flexure of the contact (8).

7. Switching device according to any one of claims 1 to 6, **characterised in that** means (21) for locking the fuses (9) in the lid (10) are provided which are situated alongside the fuse (9) in each case.

8. Switching device according to any one of claims 1 to 7, **characterised in that** the respective fuse (9) has retaining means (20) for joining the fuse (9) to the lid (10), the fuse (9) that is adjacent to the swivelling axis (11) of the lid (10) being adapted to be inserted into the lid (10) with a motion directed away from the swivelling axis (11) and/or the fuses (9, 9) that are remote from the swivelling axis (11) of the lid (10) being adapted to be inserted into the lid (10) with a motion directed at the swivelling axis (11).

9. Switching device according to any one of claims 1 to 8, **characterised in that** the respective fuse (9) has retaining means (20) for joining the fuse (9) to the lid (10), the fuse (9) that is adjacent to the swivelling axis (11) of the lid (10) being adapted to be inserted into the lid (10) with a motion directed at the swivelling axis (11) and/or the fuses (9, 9) that are remote from the swivelling axis (11) of the lid (10) being adapted to be inserted into the lid (10) with a motion directed away from the swivelling axis (11).

## Revendications

1. Interrupteur-sectionneur tripolaire à coupure en charge (1), en particulier pour le montage sur des systèmes de barres omnibus (2), comprenant des espaces de montage disposés en décalage pour trois coupe-circuits basse tension à haut pouvoir de coupure (9), un boîtier (3) pour la réception des contacts (8) pour les coupe-circuits (9) et un couvercle (10) monté en pivotement dans le boîtier (3) pour la réception des coupe-circuits (9), un coupe-circuit de mise en marche en avance de phase et de mise hors marche en retard de phase (9) étant disposé plus près de l'axe de pivotement (11) du couvercle (10) que les deux coupe-circuits restants (9, 9), **caractérisé en ce que** les deux coupe-circuits (9, 9) de mise en marche en retard de phase sont disposés de telle sorte qu'ils se connectent de manière simultanée, et **en ce que** les coupe-circuits (9) sont disposés symétriquement par rapport à l'axe médian longitudinal (A-A) de l'interrupteur-sectionneur à coupure en charge (1) .

2. Interrupteur selon la revendication 1, **caractérisé en ce que** les coupe-circuits sont des coupe-circuits basse tension à haut pouvoir de coupure (9) de dimension 000.

3. Interrupteur selon la revendication 1 ou 2, **caractérisé en ce qu'**il présente une largeur maximale de 70 mm, de préférence une largeur maximale de 63 mm.

4. Interrupteur selon l'une quelconque des revendications 1 à 3, **caractérisé en ce que** l'axe de pivotement (11) du couvercle (10) est disposé en inclinaison contre le contact (8) le plus proche de manière correspondante à la direction de pivotement de la lame d'interrupteur (12) du coupe-circuit (9) attribué à ce contact (8), ce contact (8) s'appuyant sur une plaque de base de (13) et une section en U (15) de ce contact formant, avec la plaque de base (13), un angle aigu, de préférence un angle entre 75° et 85°, en particulier un angle de 80°.

5. Interrupteur selon l'une quelconque des revendications 1 à 4, **caractérisé en ce que** le contact (8) situé le plus près de l'axe de pivotement (11) du couvercle (10) est muni de guides d'insertion (18).

6. Interrupteur selon l'une quelconque des revendications 1 à 5, **caractérisé en ce que** le contact situé le plus près de l'axe de pivotement (11) du couvercle (10) est muni de renforcements (19) pour augmenter la résistance à la flexion du contact (8).

7. Interrupteur selon l'une quelconque des revendications 1 à 6, **caractérisé en ce qu'**on prévoit des moyens (21) pour le verrouillage des coupe-circuits (9) dans le couvercle (10), qui sont disposés respectivement à proximité du coupe-circuit (9).

8. Interrupteur selon l'une quelconque des revendications 1 à 7, **caractérisé en ce que** le coupe-circuit respectif (9) présente des moyens de retenue (20) pour la liaison du coupe-circuit (9) au couvercle (10), le coupe-circuit (9) voisin de l'axe de pivotement (11) du couvercle (10) étant à même de venir s'insérer dans le couvercle (10) via un mouvement se détournant de l'axe de pivotement (11) et/ou les coupe-circuits (9, 9) se détournant de l'axe de pivotement (11) du couvercle (10) étant à même de s'insérer dans le couvercle (10) via un mouvement orienté vers l'axe de pivotement (11).

9. Interrupteur selon l'une quelconque des revendications 1 à 8, **caractérisé en ce que** le coupe-circuit respectif (9) présente des moyens de retenue (20) pour la liaison du coupe-circuit (9) au couvercle (10), le coupe-circuit (9) voisin de l'axe de pivotement (11) du couvercle (10) étant à même de venir s'insérer dans le couvercle (10) via un mouvement orienté vers l'axe de pivotement (11) et/ou les coupe-circuits (9, 9) se détournant de l'axe de pivotement (11) du couvercle (10) étant à même de s'insérer dans le couvercle (10) via un mouvement se détournant de l'axe de pivotement (11) .
